# DEMANDE DE BREVET EUROPEEN

(11) **EP 0 794 335 A1**
(43) Date de publication de la demande: **10.09.1997**
(21) Numéro de dépôt: 97400474.9
(22) Date de dépôt: 28.02.1997
(51) Int. Cl.: F16B 7/20, F16D 1/112

(54) **Attache rapide à baionnette**

(30) Priorité: 04.03.1996 FR 9602691
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR); Mouhot, Frédéric, 25420 Voujeaucourt (FR)
(74) Mandataire: Habasque, Etienne Joel Jean-François

(57) **Abrégé**

Cette attache rapide de type à baïonnette pour le raccordement de deux organes de direction, notamment de véhicule automobile, dont l'un comporte une douille (2) munie d'au moins une fente de réception d'une partie en saillie latérale (5) d'une queue (3) de l'autre organe, l'attache comportant des moyens (4) de verrouillage en position de la partie en saillie latérale (5) de la queue (3) dans la fente de la douille (2), est caractérisée en ce que la partie en saillie latérale (5) de la queue est reliée à un manchon (3a) adapté pour être engagé sur le reste (3b) de cette queue et immobilisé axialement et angulairement sur celle-ci.

## Description

La présente invention concerne une attache rapide de type à baïonnette pour le raccordement de deux organes de direction notamment de véhicule automobile.

Plus particulièrement, l'invention concerne une attache rapide pour le raccordement de deux organes dont l'un comporte une douille munie d'au moins une fente de réception d'une partie en saillie latérale d'une queue de l'autre organe, l'attache comportant des moyens de verrouillage en position de la partie en saillie latérale de la queue dans la fente de la douille.

On connaît déjà dans l'état de la technique, notamment du document FR-A-2 628 488 au nom de la Demanderesse, une attache rapide de ce type dans laquelle la douille comporte au moins une fente hélicoïdale et porte un organe de guidage et de verrouillage repoussant élastiquement la partie en saillie latérale de la queue dans le fond de la fente hélicoïdale de manière à la verrouiller dans cette position.

Par ailleurs, des cannelures sont prévues entre la douille et l'organe de guidage et de verrouillage pour permettre un déplacement axial de cet organe par rapport à cette douille, tout en empêchant cet organe de se déplacer angulairement autour de la douille, afin d'assurer un verrouillage correct en position de la queue dans cette douille.

Le but de l'invention est de proposer différents perfectionnements à cette attache.

A cet effet, l'invention a pour objet une attache rapide de type à baïonnette pour le raccordement de deux organes de direction, notamment de véhicule automobile, dont l'un comporte une douille munie d'au moins une fente de réception d'une partie en saillie latérale d'une queue de l'autre organe, l'attache comportant des moyens de verrouillage en position de la partie en saillie latérale de la queue dans la fente de la douille, caractérisée en ce que la partie en saillie latérale de la queue est reliée à un manchon adapté pour être engagé sur le reste de cette queue et immobilisé axialement et angulairement sur celle-ci.

Selon un autre aspect, la queue et la douille comprennent des surfaces de contact complémentaires tronconiques pour permettre un rattrapage des jeux de montage de la queue dans la douille.

Selon encore un autre aspect, la queue et la douille comprennent des moyens d'accouplement de sécurité permettant un fonctionnement en mode dégradé de l'attache.

L'invention sera mieux comprise à la lecture de la description qui va suivre, donnée uniquement à titre d'exemple et faite en se référant aux dessins annexés, sur lesquels :
- la Fig.1 représente une vue en coupe schématique illustrant la structure d'un premier mode de réalisation d'une attache rapide selon l'invention;
- la Fig.2 représente une vue en coupe prise suivant la ligne II-II de la figure 1, la queue étant engagée dans la douille;
- la Fig.3 représente une vue de côté d'une telle attache rapide, la queue étant engagée dans la douille;
- la Fig.4 représente une vue en bout et en coupe d'une telle attache rapide, la queue étant engagée dans la douille; et
- la Fig.5 représente une vue en coupe schématique illustrant la structure d'un second mode de réalisation d'une attache rapide selon l'invention.

On reconnaît en effet sur ces figures, une attache rapide de type à baïonnette désignée par la référence générale 1 et présentant une structure générale se rapprochant de celle décrite dans le document antérieur mentionné précédemment.

En effet, cette attache rapide permet le raccordement de deux organes de direction notamment d'un véhicule automobile, dont l'un comporte une douille 2 munie d'au moins une fente de réception d'une partie en saillie latérale correspondante d'une queue 3 de l'autre organe de direction.

Par ailleurs, cette attache rapide comporte également des moyens 4 de verrouillage en position de la ou de chaque partie en saillie latérale de la queue 3 dans la fente correspondante de la douille 2 pour le raccordement de la queue et de la douille et donc des deux organes de direction du véhicule.

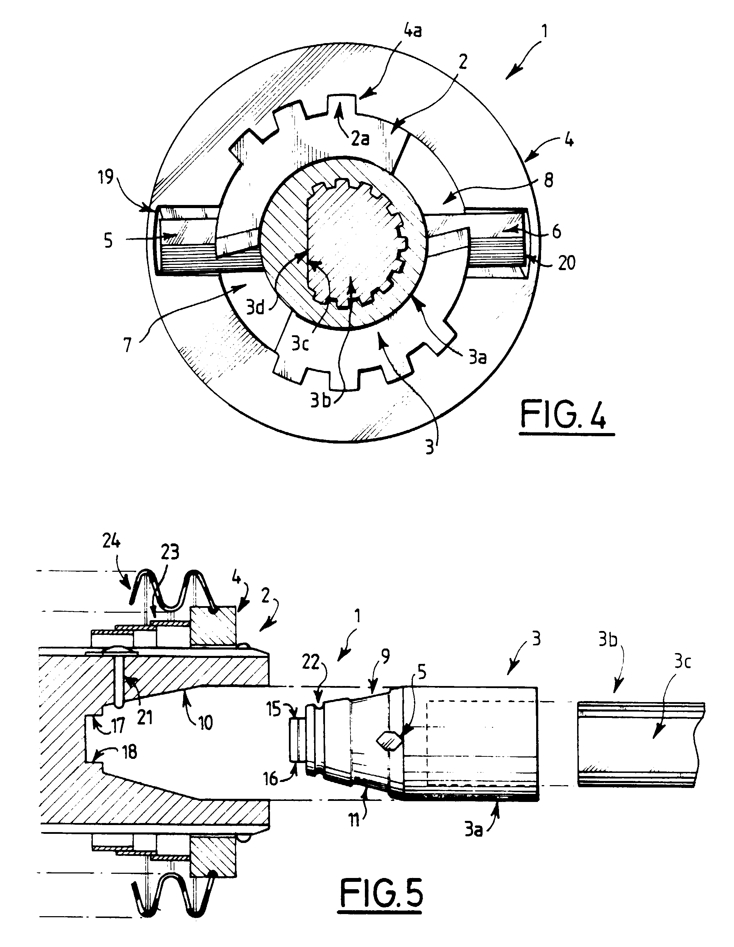

Dans l'exemple de réalisation représenté sur ces figures, la queue 3 comporte deux parties en saillie latérale diamétralement opposées 5 et 6 qui sont adaptées pour s'engager dans deux fentes correspondantes 7 et 8 de la douille 2 (Fig.4).

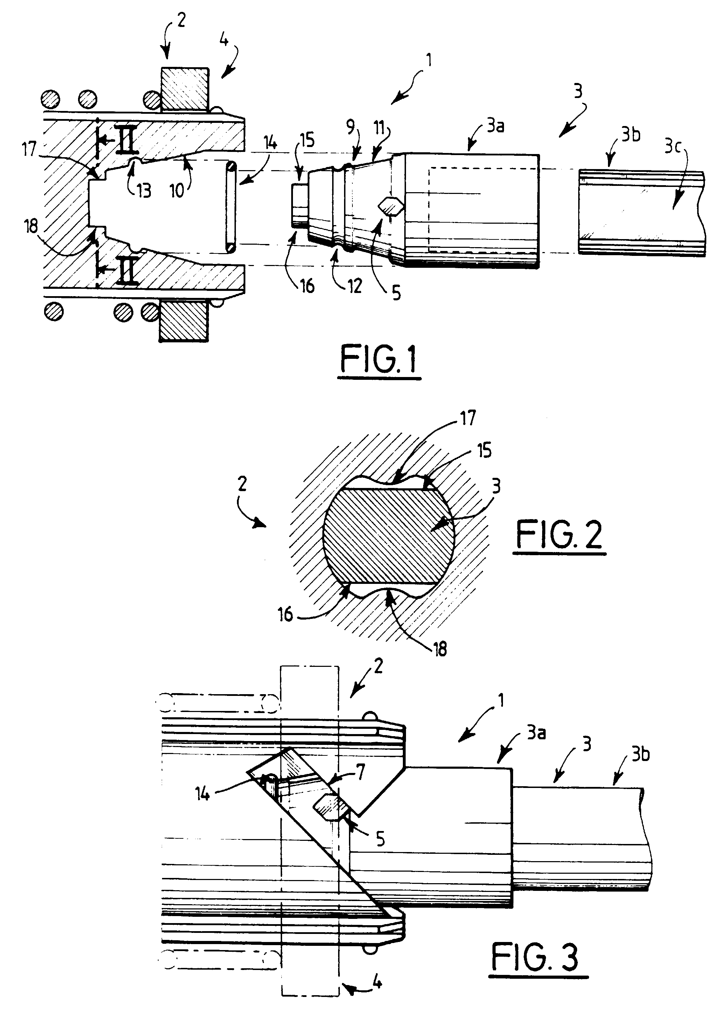

Comme on peut le voir en particulier sur la figure 1, la queue 3 et la douille 2 comprennent des surfaces de contact complémentaires tronconiques pour permettre un rattrapage des jeux de montage de la queue dans la douille.

Ces surfaces sont désignées par les références générales 9 et 10 sur ces figures respectivement pour la queue 3 et la douille 2.

On notera que la surface tronconique correspondante 9 de la queue 3 peut comporter un décrochement désigné par la référence générale 11 sur la figure 1, permettant d'améliorer la mise en contact de l'extrémité de la queue dans la douille.

Ce décrochement peut bien entendu être prévu dans la douille.

De plus, la queue et la douille peuvent comporter des moyens d'accouplement de sécurité, permettant un fonctionnement en mode dégradé de l'attache, ces moyens d'accouplement de sécurité pouvant comporter des moyens d'accouplement axial de sécurité et des moyens d'accouplement angulaire de sécurité.

Dans l'exemple de réalisation représenté sur cette figure 1, les moyens d'accouplement axial de sécurité comprennent des gorges de la douille et de la queue en regard l'une de l'autre et dans lesquelles s'étend un jonc élastique de maintien de la queue dans la douille.

C'est ainsi par exemple que la gorge de la queue 3 est désignée par la référence générale 12 sur cette figure 1, tandis que la gorge correspondante de la douille 2 est désignée par la référence générale 13, le jonc élastique étant désigné par la référence générale 14.

Ceci permet d'assurer un certain maintien axial de la queue dans la douille en mode de fonctionnement dégradé de l'attache.

Comme cela sera décrit plus en détail par la suite d'autres modes de réalisation de ces moyens d'accouplement axial de sécurité et d'autres dispositions de ceux-ci peuvent être envisagés.

Les moyens d'accouplement angulaire de sécurité peuvent quant à eux comporter des moyens prévus à l'extrémité de la queue 3 et dans la surface correspondante en regard de la douille 2.

C'est ainsi par exemple que sur ces figures, la queue 3 comporte à son extrémité adaptée pour être engagée dans la douille 2, des méplats 15 et 16 par exemple diamétralement opposés et adaptés pour coopérer avec des surfaces de butée complémentaires correspondantes 17 et 18 de la douille 2, pour assurer un accouplement angulaire de sécurité de la queue et de la douille, en mode de fonctionnement dégradé de l'attache, par exemple à la suite de la rupture de l'une des autres pièces d'entraînement de l'attache, comme cela ressort plus clairement de la figure 2.

Dans l'exemple de réalisation représenté sur ces figures, ces surfaces de butée complémentaires 17 et 18 de la douille 2 sont formées par des bossages radiaux de celle-ci.

Bien entendu, une disposition inverse de ces moyens à méplats et bossages sur la queue et la douille peut être envisagée.

On conçoit alors qu'en mode de fonctionnement dégradé de l'attache, les moyens d'accouplement de sécurité permettent d'assurer un certain maintien axial de la queue dans la douille et une transmission de mouvement de rotation entre cette queue et cette douille, avec, dans l'exemple décrit, un certain jeu angulaire, ce qui permet de prévenir l'utilisateur d'un défaut de fonctionnement de l'attache.

On notera que la surface de contact tronconique complémentaire 9 de la queue 3, de même que les moyens correspondants d'accouplement de sécurité axial et angulaire 12,15,16, et les parties en saillie latérales 5,6 de celle-ci, peuvent être prévues sur un manchon désigné par la référence générale 3a sur ces figures, ce manchon étant tubulaire et étant adapté pour être engagé sur l'extrémité du reste 3b de la queue, par exemple.

Dans ce cas, des moyens d'immobilisation angulaire et axiale du manchon 3a sur le reste 3b de la queue sont prévus entre ces pièces. Ces moyens comprennent par exemple des cannelures complémentaires de ces pièces, le manchon étant engagé à force sur le reste de la queue pour assurer son immobilisation angulaire et son immobilisation axiale sur celle-ci.

Bien entendu, d'autres moyens d'immobilisation peuvent être envisagés.

Des moyens de détrompage peuvent également être prévus sur ces pièces pour assurer un montage correct en position notamment angulaire de ce manchon 3a sur le reste 3b de la queue 3, ces moyens de détrompage comprenant par exemple des méplats complémentaires 3c et 3d de ces pièces comme on peut le voir plus clairement sur la figure 4.

On notera également que les parties en saillie latérale de ce manchon 3a, désignées par les références générales 5 et 6, peuvent par exemple être venues de matière avec ce manchon 3a et présenter une section polygonale permettant d'améliorer l'accouplement de la queue dans la douille.

On notera également, par exemple en regard de la figure 3, que la ou chaque fente correspondante 7,8 de la douille 2 peut en fait présenter une forme rectiligne et être décalée d'un angle par exemple d'à peu près 45° par rapport à l'axe de cette douille, cette fente présentant une extrémité ouverte évasée facilitant l'engagement de la partie en saillie latérale correspondante de la queue dans celle-ci.

On notera également, par exemple en regard de la figure 4, que des moyens de détrompage peuvent être prévus entre de la bague de verrouillage 4 et la douille 2 pour permettre un montage correct de celle-ci en position.

On sait en effet que la bague 4 est montée déplaçable axialement sur la douille 2, par exemple par l'intermédiaire de cannelures complémentaires 4a,2a (Fig.4) respectivement, ou autres.

En prévoyant de chaque côté de cette bague 4, des nombres et/ou des dispositions de cannelures différents, il est possible d'assurer cette fonction de détrompage.

Bien entendu, d'autres moyens de détrompage peuvent être envisagés.

On notera également que cette bague 4 comporte sur son bord interne par exemple deux décrochements diamétralement opposés désignés par les références générales 19 et 20 sur la figure 4, pour le passage des parties en saillie latérale 5,6 de la queue 3.

Ces décrochements permettent alors par exemple de maintenir radialement en position une partie en saillie qui aurait tendance à se détacher de la queue 3.

Sur la figure 5, on a représenté un autre exemple de réalisation de moyens d'accouplement axial de sécurité entre la queue 3 et la douille 2.

En effet, sur la figure 1, ces moyens d'accouplement axial de sécurité comprennent un jonc adapté pour s'engager dans des gorges correspondantes de cette queue et de cette douille.

Dans l'exemple de réalisation représenté sur cette figure 5, ces moyens d'accouplement axial de sécurité comprennent par exemple au moins un pion désigné par la référence 21 sur cette figure, adapté pour traverser la douille 2 et dont une extrémité est associée à des moyens de sollicitation élastique, pour faire saillie dans cette douille et s'engager dans une gorge correspondante par exemple 22 de la queue 3.

Les moyens de sollicitation élastique de ce pion 21 sont par exemple constitués par des moyens de sollicitation élastique 23 de la bague 4 de verrouillage vers sa position de verrouillage.

Dans ce cas, les moyens de sollicitation comprennent par exemple un ressort plat rétractable permettant de solliciter d'une part, cette bague de verrouillage 4 vers sa position de verrouillage et d'autre part, le pion 21 vers sa position active, dans laquelle son extrémité opposée à celle coopérant avec ces moyens de sollicitation 23, fait saillie à l'intérieur de la douille 2 pour s'engager dans la gorge 22 de la queue 3, afin de maintenir celle-ci en position de sécurité dans la douille 2.

Une disposition inverse de ce pion peut également être envisagée sur la queue ou le manchon de celle-ci.

Il va de soi bien entendu que différents modes de réalisation de ces moyens d'accouplement de sécurité peuvent être envisagés.

On notera également en regard de cette figure 5, qu'un soufflet de protection 24, par exemple en matière plastique ou autre, peut être disposé autour de la douille 2 pour éviter l'encrassement de celle-ci.

On conçoit alors que l'attache rapide selon l'invention présente un certain nombre d'avantages par rapport aux attaches connues dans l'état de la technique.

En effet :
1) la queue et la douille comprennent des surfaces de contact complémentaires tronconiques permettant un rattrapage des jeux de montage de la queue dans la douille,
2) la queue et la douille comprennent des moyens d'accouplement axial et angulaire de sécurité, permettant d'augmenter la sécurité de fonctionnement de cette attache, par exemple en cas de rupture de l'un des organes de celle-ci, en permettant un mode de fonctionnement dégradé de celle-ci perceptible par l'utilisateur, pour l'avertir de ce mode de fonctionnement dégradé.
3) la surface tronconique correspondante de même que la ou chaque partie en saillie latérale et les moyens d'accouplement de sécurité de la queue peuvent être prévus sur un manchon adapté pour être engagé sur cette queue, ce qui permet de faciliter la fabrication de celle-ci et d'améliorer les capacités d'adaptation de l'attache rapide à différents organes de direction, notamment d'un véhicule automobile,
4) différents moyens de détrompage sont prévus pour faciliter le montage de la bague de verrouillage sur la douille et du manchon sur le reste de la queue,
5) la ou chaque fente de la douille présente une forme simplifiée, ce qui facilite sa réalisation, et
6) un soufflet de protection est prévu sur la douille.

## Revendications

1. Attache rapide de type à baïonnette pour le raccordement de deux organes de direction, notamment de véhicule automobile, dont l'un comporte une douille (2) munie d'au moins une fente (7,8) de réception d'une partie en saillie latérale (5,6) d'une queue (3) de l'autre organe, l'attache comportant des moyens (4) de verrouillage en position de la partie en saillie latérale (5,6) de la queue (3) dans la fente (7,8) de la douille (2), caractérisée en ce que la partie en saillie latérale (5,6) de la queue est reliée à un manchon (3a) adapté pour être engagé sur le reste (3b) de cette queue et immobilisé axialement et angulairement sur celle-ci.

2. Attache selon la revendication 1, caractérisée en ce que la queue (3) et la douille (2) comprennent des surfaces de contact complémentaires tronconiques (9,10) pour permettre un rattrapage des jeux de montage de la queue dans la douille.

3. Attache selon la revendication 1 ou 2, caractérisée en ce que la queue et la douille comprennent des moyens d'accouplement de sécurité (12,13,14,15,16,17, 18; 21,22,23), permettant un fonctionnement en mode dégradé de l'attache.

4. Attache selon la revendication 3, caractérisée en ce que les moyens d'accouplement de sécurité comprennent des moyens d'accouplement axial de sécurité (12,13,14; 21,22,23).

5. Attache selon la revendication 4, caractérisée en ce que les moyens d'accouplement axial de sécurité comprennent des gorges (12,13) de la douille (2) et de la queue (3) et dans lesquelles s'étend un jonc élastique (14) de maintien axial de sécurité de la queue dans la douille.

6. Attache selon la revendication 4, caractérisée en ce que les moyens d'accouplement axial de sécurité comprennent au moins un pion (21) en saillie de l'un des éléments, queue ou douille, associé à des moyens de sollicitation élastique (23) de celui-ci dans une gorge (22) de l'autre élément, douille ou queue.

7. Attache selon l'une quelconque des revendications 3 à 6, caractérisée en ce que les moyens d'accouplement de sécurité comprennent des moyens d'accouplement angulaire de sécurité (15,16,17,18).

8. Attache selon la revendication 7, caractérisée en ce que les moyens d'accouplement angulaire de sécurité comprennent au moins un méplat (15,16) de l'un des éléments, queue ou douille, adapté pour coopérer avec une surface de butée correspondante (17,18) de l'autre élément, douille ou queue.

9. Attache selon la revendication 8, caractérisée en ce que la surface de butée correspondante de l'autre élément est formée par un bossage (17,18) de celui-ci.

10. Attache selon l'une quelconque des revendications précédentes, caractérisée en ce que la fente (7,8) de la douille est inclinée à peu près à 45° par rapport à l'axe de celle-ci et présente une extrémité ouverte évasée facilitant l'engagement de la partie en saillie latérale (5,6) de la queue (3) dans cette fente (7,8) de la douille (2).

11. Attache selon l'une quelconque des revendications précédentes, caractérisée en ce que les moyens de verrouillage comprennent une bague de verrouillage (4) disposée autour de la douille (2) et dont le bord interne comporte un décrochement (19,20) de passage pour la partie en saillie latérale (5,6) de la queue, lors de son engagement dans la fente de la douille.

12. Attache selon la revendication 11, caractérisée en ce que la bague (4) et la douille (2) comprennent des moyens de détrompage (2a,4a) pour le montage de la bague sur la douille.

13. Attache selon l'une quelconque des revendications précédentes, caractérisée en ce que la partie en saillie latérale (5,6) de la queue présente une section polygonale.

14. Attache selon l'une quelconque des revendications précédentes, caractérisée en ce que la partie en saillie latérale (5,6) est venue de matière avec le manchon (3a).

15. Attache selon la revendication 1 et l'une quelconque des revendications 2 à 14, caractérisée en ce que la surface de contact complémentaire tronconique (9) de la queue est ménagée sur le manchon (3a).

16. Attache selon la revendication 1 et l'une quelconque des revendications 3 à 15, caractérisée en ce que les moyens d'accouplement de sécurité (12,15,16; 22) de la queue sont ménagés sur le manchon (3a).

17. Attache selon l'une quelconque des revendications précédentes, caractérisée en ce qu'un soufflet de protection (24) est disposé autour de la douille (2).

18. Attache selon l'une quelconque des revendications précédentes, caractérisée en ce que le manchon et le reste de la queue comportent des moyens de détrompage (3c,3d) pour le montage de celui-ci sur le reste de la queue.
